# EUROPEAN PATENT APPLICATION

(11) **EP 2 498 362 A1**
(43) Date of publication of application: **12.09.2012**
(21) Application number: 10827980.3
(22) Date of filing: 28.10.2010
(51) Int. Cl.: H02J 3/00

(54) **POWER DISTRIBUTION SYSTEM AND PROTECTION METHOD FOR MAIN LINE THEREOF**

(30) Priority: 06.11.2009 JP 2009255403
(71) Applicant: Panasonic Corporation, Osaka 571-8501 (JP)
(72) Inventor: SHIKATA, Yoshikazu, Osaka 540-6207 (JP); KOSHIN, Hiroaki, Osaka 540-6207 (JP)
(74) Representative: Rocke, Carsten
(86) International application number: PCT/IB2010/002754
(87) International publication number: WO 2011/055197

(57) **Abstract**

A power distribution system distributes power to each section of a building via a main line which is wired to pass through each section of the building. The power distribution system is equipped with a plurality of sensors which are provided at each section of the building and which monitor the current value of the main line in the respective sections.

## Description

### Field of the Invention

The present invention relates to a power distribution system for a building such as a residential complex or a tenant building and a protection method for a main line thereof.

### Background of the Invention

In a building such as a residential complex or a tenant building, power is distributed to a tenant or a dwelling unit of each floor via a main line which is wired to pass through each floor, as described in Patent Document 1. The main line is branched into electric power distribution lines in each floor, so that power can be transmitted to each dwelling unit or each tenant via the electric power distribution lines.

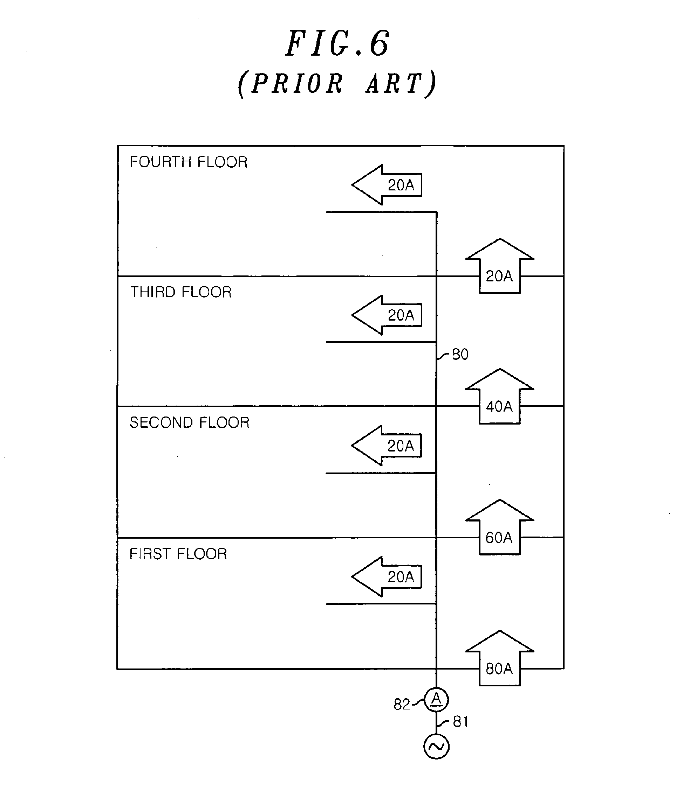

When power is not generated in a building, a commercial AC current passing through a main line 80 is sequentially distributed to each floor of the building, as shown in Fig. 6. In that case, a current value of the main line 80 becomes maximum at a base portion 81 of the main line 80, i.e., at a connection portion with a commercial AC power supply.

For example, in Fig. 6, a current of about 20A is supplied to each floor of the building. In that case, a total current of about 80A flows through the base portion 81 of the main line 80. Therefore, an overcurrent of the main line 80 can be detected simply by installing a current sensor 82 at the base portion 81 of the main line 80 and monitoring a current value of the base portion 81.
[Patent Document 1] Japanese Patent Application Publication No. 2008-178275

Recently, however, development and distribution of a personal small-sized power generator individually installed at a dwelling unit or an office, such as a fuel cell or a solar photovoltaic power generator, are in progress. Further, it is considered to share generated power between floors of a building in order to efficiently utilize the generated power. In other words, when surplus power is generated in a certain floor of a building, the surplus power is supplied to another floor, thereby effectively reducing consumption of commercial AC power in the entire building.

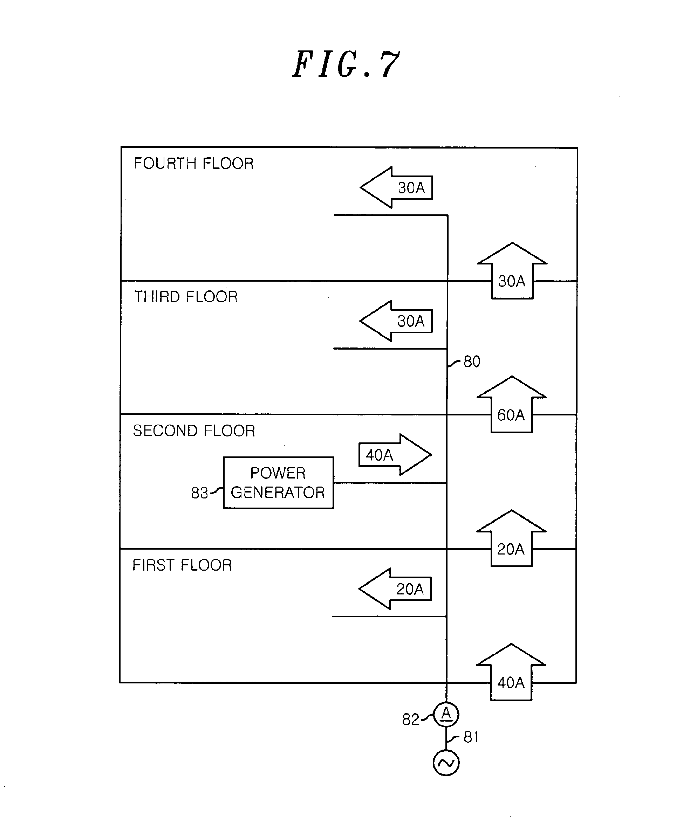

In that case, however, a current value becomes maximum at a portion other than the base portion 81 of the main line 80. For example, referring to Fig. 7, in a second floor of a building, surplus power is generated in output power of a power generator 83, so that the surplus power is supplied to an upper floor of the building. As a result, a current value of the main line 80 between the second floor and the third floor exceeds a current value of the base portion 81.

In the example shown in Fig. 7, a current of about 40A flows through the base portion 81 of the main line 80, and a current of about 20A is distributed to the first floor of the building. Therefore, the residual current of about 20A flows between the first floor and the second floor. Meanwhile, in the second floor, a surplus current of about 40A is generated in the output power of the power generator 83. Thus, the surplus current is supplied to an upper floor via the main line 80.

Accordingly, a current of about 60A, i.e., the sum of the current of about 20A supplied from the first floor and the surplus current of about 40A from the second floor, flows through the main line 80 between the second floor and the third floor. When the power is transmitted and received between the floors of the building, it is not possible to detect an overcurrent of the main line 80 by monitoring a current value of the main line 80 only at the base portion 81.

### Summary of the Invention

In view of the above, the present invention provides a power distribution system capable of reliably detecting an overcurrent of a main line even in the case where power is transmitted and received between floors of a building.

Further, the present invention provides a power distribution system and a protection method for a main line thereof, capable of reliably detecting an overcurrent of a main line and protecting the main line from the overcurrent.

In accordance with a first aspect of the present invention, there is provided a power distribution system for distributing power via a main line, including: a plurality of current sensors, provided between nodes of electric power distribution lines branched from the main line, for monitoring a current value of the main line.

Further, the main line may distribute power to each section of a structure via the main line which is wired to pass through each section of the structure and the plurality of current sensors may be provided at each section of the structure and monitor the current value of the main line in each section of the structure.

In the power distribution system having the above-described configuration, when the power is transmitted and received between the sections of the building, the current value of the main line may become maximum at a portion other than the base portion of the main line. Even in that case, the above-described configuration can reliably detect the overcurrent of the main line because the current value of the main line in each section of the building is monitored.

Further, the power distribution system may include a protection unit for protecting, when any of the current sensors detects a current value greater than a predetermined value, the main line from an overcurrent by limiting power consumption of a section adjacent to a section where a current sensor that has detected the overcurrent is installed.

In the above-described configuration, when the overcurrent of the main line is detected, the power consumption of the section adjacent to the section where the overcurrent is detected is limited. By limiting the power consumption of the section adjacent to the section where the overcurent is detected, the current value of the section where the overcurrent is detected can be reduced. Accordingly, in accordance with the above-described configuration, the main line can be properly protected from the overcurrent.

Further, the power distribution system may include a protection unit for protecting, when any of the current sensors detects a current value greater than a predetermined value, the main line from an overcurrent by shutting down a specific breaker provided at a section adjacent to a section where the current sensor that has detected the overcurrent is installed.

In the above-described configuration, when the overcurrent of the main line is detected, a specific breaker provided at the section adjacent to the section where the overcurrent is detected is shut down. If the breaker is shut down, the power consumption of the section adjacent to the section where the overcurrent is detected is decreased, and the current value of the main line at the section where the overcurrent is detected is decreased. Therefore, in accordance with the above configuration, the main line can be properly protected from the overcurrent.

Further, the surplus power may be transmitted and received between the sections of the building. The present invention is preferably applied to the power distribution system in which surplus power is transmitted and received between the sections of the building.

In accordance with a second aspect of the present invention, there is provided a protection method of a main line of a power distribution system for distributing power to each section of a structure via the main line which is wired to pass through each section of the structure, including: monitoring a current value of the main line in each section of the structure; and limiting power consumption of a section adjacent to a section where the current value greater than a predetermined value is monitored.

In the above-described protection method, the current value of the main line in each section of the building is monitored. Thus, even when the power is transmitted and received between the sections of the building, the overcurrent of the main line can be reliably detected. When the monitored current value is greater than a predetermined value, the power consumption of the section adjacent to the section where the overcurrent greater than the predetermined value is detected is limited. By limiting the power consumption as described above, the current of the section where the overcurrent is detected can be decreased. Accordingly, the protection method described above can properly protect the main line from the overcurrent.

In accordance with a third aspect of the present invention, there is provided a protection method of a main line of a power distribution system for distributing power to each section of a structure via the main line which is wired to pass through each section of the structure, including: monitoring a current value of the main line in each section of the structure; and shutting down a specific breaker provided at a section adjacent to a section where the current value greater than a predetermined value is monitored.

In the above-described the protection method, the current value of the main line between the sections of the building is monitored, so that the overcurrent of the main line can be reliably detected even in the case where the power is transmitted and received between the sections of the building. Moreover, when the monitored current value is greater than the predetermined value, a specific breaker provided at the section adjacent to the section where the current value greater than the predetermined value is detected is shut down. Hence, the power consumption of the section adjacent to the section where the overcurrent is detected is limited, and the current value of the section where the overcurent is detected is decreased. Accordingly, in accordance with the protection method, it is possible to reliably detect the overcurrent of the main line and also possible to protect the main line from the overcurrent.

Further, the structure may be a building and the section is a floor.

In accordance with the power distribution system of the present invention, the overcurrent of the main line can be reliably detected even in the case where power is transmitted and received between the sections of the building. Further, in accordance with the protection method for the main line of the power distribution system, the overcurrent of the main line can be reliably detected, and the main line can be properly protected from the overcurrent.

### Brief Description of the Drawings

The objects and features of the present invention will become apparent from the following description of embodiments, given in conjunction with the accompanying drawings, in which:
Fig. 1 is a block diagram schematically showing an entire configuration of a power distribution system in accordance with an embodiment of the present invention;
Fig. 2 is a block diagram schematically showing a configuration of a power supply system installed at each dwelling unit of a residential complex in the embodiment of the present invention;
Fig. 3 is a block diagram schematically showing a configuration of a general control unit in the embodiment of the present invention;
Fig. 4 is a block diagram schematically showing configurations of an AC power distribution board and a home control unit in the embodiment of the present invention;
Fig. 5 is a flowchart showing a processing sequence of the general control unit in a main line protection control routine employed in the embodiment of the present invention;
Fig. 6 is a schematic diagram showing an example of a current flow in a main line in the case of not generating power in a building; and
Fig. 7 is a schematic diagram showing an example of a current flow in a main line in the case of generating power in a building.

### Detailed Description of the Embodiments

Hereinafter, an embodiment of the present invention will be described with reference to the accompanying drawings which form a part hereof. Throughout the drawings, like reference numerals refer to like or similar parts, and redundant description thereof will be omitted.

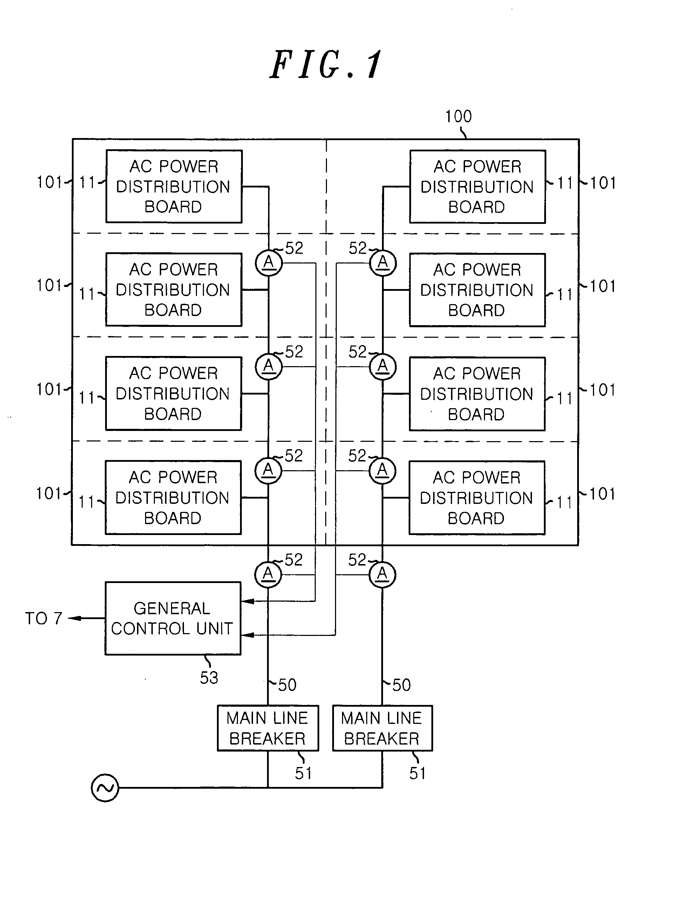

Fig. 1 shows an entire configuration of a power distribution system in a structure, e.g., a building, in accordance with an embodiment of the present invention.

A residential complex shown in Fig. 1 is equipped with a main line 50 which is wired to pass through each floor. The main line 50 is branched into electric power distribution lines in each floor, and each of the electric power distribution lines is connected to an AC power distribution board 11 of each dwelling unit 101. Further, a main line breaker 51 is installed at a base portion of the main line 50 to interrupt a current when a current flowing through the main line 50 exceeds a rated current. A residential complex referred to in the present embodiment denotes a building where a plurality of offices, stores or dwelling units is located in a single structure, for example.

Further, in the power distribution system of the present embodiment, a plurality of current sensors 52 for monitoring a current value of the main line 50 between floors of the residential complex 100 is provided between the floors of the residential complex 100. The detection signals of the current sensors 52 are input into a general control unit 53 for controlling entire power distribution of the residential complex 100.

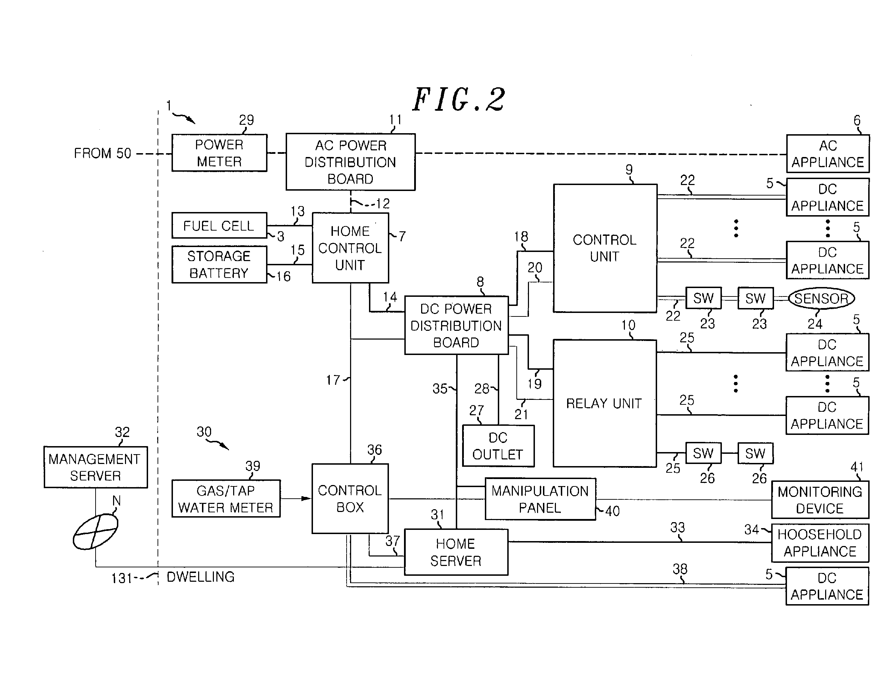

Fig. 2 shows an entire configuration of a power supply system 1 installed at each dwelling unit 101 of the residential complex 100.

As shown in Fig. 2, each dwelling unit of the residential complex 100 is equipped with the power supply system 1 for supplying power to various household appliances (lighting devices, air conditioners, electronic appliances, audio/visual devices and the like). The power supply system 1 operates various devices by using, as a power source, commercial AC power (AC power source) supplied from the main line 50. Further, the power supply system 1 supplies, as a power source, power generated by a fuel cell 3 using a reverse reaction of water electrolysis or power generated by a solar cell (not shown) to various devices. The power supply system 1 supplies power to a DC appliance 5 operating by an input of DC power and to an AC appliance 6 operating by an input of AC power.

In the power supply system 1, a home control unit 7 and a DC power distribution board (having a DC breaker) 8 function as a power distribution board of the power supply system 1. Further, the power supply system 1 includes a control unit 9 and a relay unit 10 which serve as devices for controlling operations of the household DC appliances 5.

The AC power distribution board 11 for distributing AC power is connected to the home control unit 7 via an AC power line 12. The home control unit 7 is connected to a commercial AC power supply (not shown) via the AC power distribution board 11 and also connected to the fuel cell 3 via a DC power line 13. The home control unit 7 acquires AC power from the AC power distribution board 11 and DC power from the fuel cell 3 and converts the acquired power into predetermined DC power as a power source of devices. Moreover, the home control unit 7 outputs the converted DC power to the DC power distribution board 8 via a DC power line 14 or to a storage battery 16 via a DC power line 15 so as to be stored therein. The home control unit 7 can acquire AC power from the AC power distribution board 11 and convert DC power from the fuel cell 3 or the storage unit 16 into AC power. The home control unit 7 can supply the converted AC power to the AC power distribution board 11. The home control unit 7 exchanges data with the DC power distribution board 8 through a signal line 17.

The DC power distribution board 8 functions as a breaker for DC power. The DC power distribution board 8 distributes DC power that is input from the home control unit 7 and outputs the distributed DC power to the control unit 9 via a DC power line 18 or to the relay unit 10 via a DC power line 19. Further, the DC power distribution board 8 exchanges data with the control unit 9 via a signal line 20 or with the relay unit 10 via a signal line 21.

A plurality of DC devices 5 is connected to the control unit 9. The DC appliances 5 are connected to the control unit 9 via DC supply lines 22 capable of transferring both of DC power and data through a single line. The DC supply lines 22 transfer both of the power and the data through a single line by utilizing so-called power line carrier communication in which a communication signal for transferring data through a high frequency carrier wave is superposed with a DC voltage as a power source of the DC appliances. The control unit 9 acquires DC power from the DC appliances 5 via the DC power line 18 and determines which of the DC appliances 5 is to be controlled and how to control the corresponding DC appliance 5 based on an operation instruction obtained from the DC power distribution board 8 via a signal line 20. Further, the control unit 9 outputs a DC voltage and an operation instruction to the required DC appliance 5 via the DC supply line 22 and controls the operation of the corresponding DC appliance 5.

Switches 23 that are manipulated to switch operations of the household DC appliances 5 are connected to the control unit 9 via the DC supply line 22. Moreover, a sensor 24 for detecting, e.g., a radio wave transmitted from an infrared remote controller, is connected to the control unit 9 via the DC supply line 22. Thus, the DC appliances 5 are controlled by the communication signals flowing through the DC supply lines 22 in accordance with the manipulation of the switches 23 or the detection of the sensor 24 as well as the operation instruction from the power distribution board 8.

The DC appliances 5 are connected to the relay unit 10 via DC power lines 25. The relay unit 10 acquires DC power for the DC appliances 5 via the DC power line 19 and determines which of the DC appliance 5 is to be operated based on the operation instruction obtained from the DC power distribution board 8 via the signal line 21. Further, the relay unit 10 controls the operation of the required DC appliance 5 by switching on/off the power supply to the DC power line 25 in a relay installed therein. Moreover, a plurality of switches 26 for manually manipulating the DC appliances 5 is connected to the relay unit 10. Accordingly, the DC appliances 5 are controlled by switching on/off the power supply to the DC power lines 25 in the relay by manipulation of the switches 26.

A DC outlet 27 installed at a dwelling unit in the form of a wall outlet or a bottom outlet, for example, is connected to the DC power distribution board 8 via a DC power line 28. When a plug (not shown) of a DC appliance is inserted in the DC outlet 27, DC power can be supplied to the DC appliance.

Besides, a power meter 29 capable of remote reading of power usage of the commercial AC power supply is connected between the commercial AC power supply and the AC power distribution board 11. In addition to the function of remote reading of the power usage of the commercial AC power supply, the power meter 29 also has a function of, e.g., power line carrier communication or wireless communication. The power meter 29 transmits the metering result to an electric power company or the like through the power line carrier communication, the wireless communication or the like.

The power supply system 1 includes a network system 30 for controlling various household appliances through network communication. The network system 30 is provided with a home server 31 serving as a control unit thereof. The home server 31 is connected to a management server 32 outside home via a network N such as Internet or the like, and also connected to a household appliance 34 via a signal line 33. Moreover, the home server 31 operates by using, as a power source, DC power obtained from the DC power distribution board 8 via a DC power line 35.

A control box 36 for controlling operations of various household appliances through network communication is connected to the home server 31 via a signal line 37. The control box 36 is connected to the home control unit 7 and the DC power distribution board 8 via a single line 17, and can directly control the DC appliance 5 via a DC supply line 38. The control box 36 is connected to, e.g., a gas/tap water meter 39 capable of remote reading of gas usage or water usage, and also connected to a manipulation panel 40 of a network system 30. The manipulation panel 40 is connected to a monitoring device 41 which includes, e.g., a door phone slave unit,, a sensor or a camera.

When the operation instructions of various household appliances are input through the network N, the home server 31 informs the control box 36 of the instructions and allows the control box 36 to control the various devices to perform operations in accordance with the instructions. Further, the home server 31 can provide various information acquired from the gas/tap water meter 39 with the management server 32 through the network N. When abnormality detected by the monitoring device 41 is received from the manipulation panel 40, the cause of the abnormality is also provided to the management server 32 through the network N.

In the residential complex 100 in which each dwelling unit 101 is equipped with the power supply system 1, power is generated by the fuel cell 3 in each dwelling unit 101. In the residential complex 100, surplus power is transmitted and received between the dwelling units 101. Moreover, the surplus power is transmitted and received between the floors of the residential complex 100.

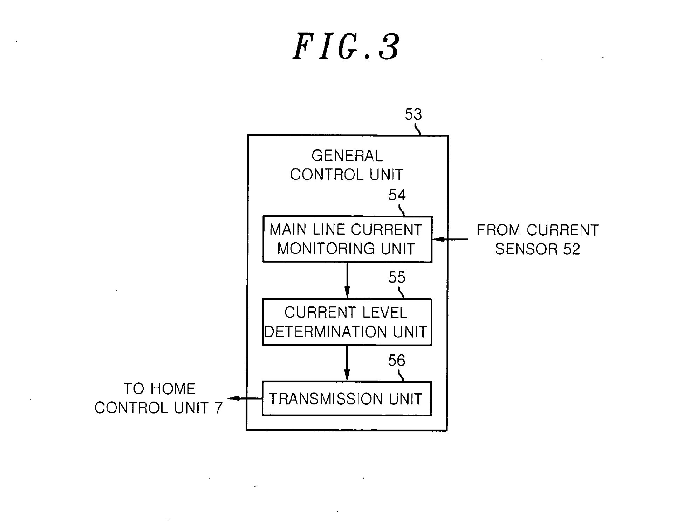

As described above, in the residential complex 100, the entire power distribution control is performed by the general control unit 53. Fig. 3 shows a configuration of the general control unit 53. As shown in Fig. 3, the general control unit 53 has a main line current monitoring unit 54 for monitoring a current value of the main line 50 which is detected by the current sensors 52 installed at each of the sections in the residential complex 100. In addition, the general control unit 53 has a current level determination unit 55 for determining whether or not a current value of the main unit 50 is excessive and a transmission unit 56 for transmitting an instruction signal to the home control unit 7 of each dwelling unit 101 based on the determination result.

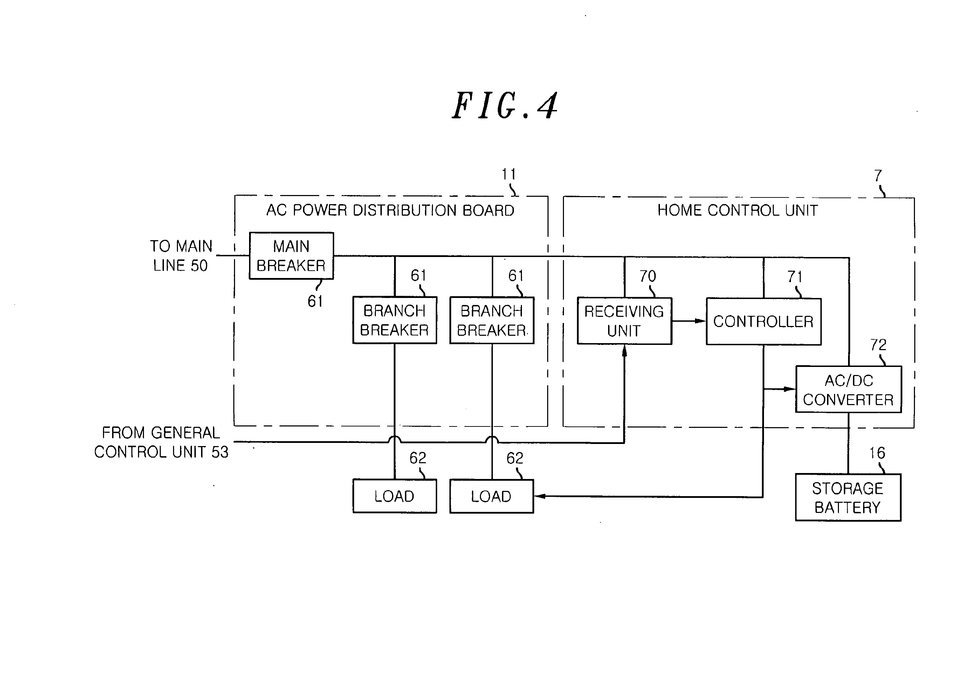

Fig. 4 shows configurations of the home control unit 7 and the AC power distribution board 11 which are installed at each dwelling unit 101.

As shown in Fig. 4, the AC power distribution board 11 has a main breaker 60 and a plurality of branch breakers 61. The main breaker 60 serves as a breaker that blocks connection between the main line 50 and the power supply system 1 when the current supplied from the main line 50 is excessive. The branch breakers 61 serve as breakers that blocks power supply to each of household loads 62 when necessary. The loads 62 may be various household electrical devices such as lighting devices, air conditioners, electronic device, audio/visual devices and the like.

Meanwhile, the home control unit 7 has a receiving unit 70 for receiving an instruction signal from the general control unit 53, and a controller 71. The controller 71 controls operations of the household loads 62 based on the instruction signal received by the receiving unit 70. The controller 71 controls an operation of an AC/DC converter 72 and further controls charging/discharging of the storage battery 16 based on the instruction signal received by the receiving unit 70. In Fig. 4, the illustration of the DC power lines 13 and 14 extending from the home control unit 7 to the fuel cell 3 and the DC power distribution board is omitted.

In the power distribution system for a building of the present embodiment which is configured as described above, a plurality of current sensors 52 for monitoring a current value of the main line 50 between floors of the residential complex 100 are provided between the floors of the residential complex 100. Further, the current values detected by the current sensors 52 are monitored by the general control unit 53. As a result, an overcurrent that occurs any portion of the main line 50 can be reliably detected.

In the present embodiment, when an overcurrent of the main line 50 is detected, i.e., when any of the current sensors 52 detects a current value greater than a predetermined value, the general control unit 53 performs the main line protection control for protecting the main line 50 from an overcurrent. In this case, the protection control is realized by limiting power consumption of an upper floor of a floor where the current sensor 52 that has detected the overcurrent is installed.

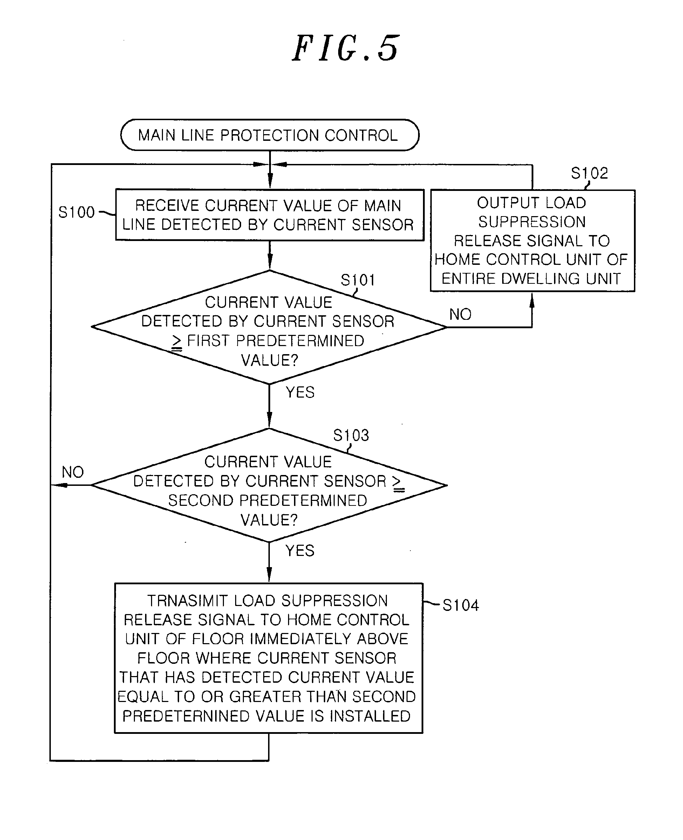

Fig. 5 shows a processing sequence of a main line protection control routine employed in the present embodiment. Further, the processing of this routine is performed by the general control unit 53 from start to end.

When this routine is initiated, first, at a step S100, the general control unit 53 receives current values detected by the current sensors 52 provided at the main line 50 between the floors. At a step S101, the general control unit 53 checks whether or not the current values detected by the current sensors 52 is equal to or greater than a first predetermined value. Moreover, in the present embodiment, the first predetermined value is set to, e.g., a current value corresponding to about 80% of a shutdown current of the main line breaker 51.

If any of the current sensors 52 does not detect a current value greater than the first predetermined value (S101:NO), the general control unit 53 proceeds to a step S102 and outputs load suppression release signals to the home control units 7 of the entire dwelling units at a step S102. Upon completion of the output of the load suppression release signals, the general control unit 53 returns to the step S100. When the load suppression release signals are received, the home control units 7 release a load suppression control, if it is being performed. The load suppression control will be described later

On the other hand, when any of the current sensors 52 detects a current value equal to or greater than the first predetermined value (S101:YES), the general control unit 53 proceeds to a step S103 and checks whether or not any of the current sensors 52 detects a current value greater than a second predetermined value at the step S103.

In the present embodiment, the second predetermined value is set to, e.g., a current value corresponding to about 90% of a shutdown current of the main line breaker 51. In other words, in the present embodiment, the step S103 corresponds to a step of monitoring a current value of the main line 50 between floors of the building (the residential complex 100).

If any of the current sensors 52 does not detect a current value equal to or greater than the second predetermined value (S103:NO), the general control unit 53 returns to the step S100.

Meanwhile, if any of the current sensors 52 detects a current value equal to or greater than the second predetermined value (S103:YES), the general control unit 53 transmits, at a step S104, a load suppression release signal to the home control unit 7 of an upper floor of a floor where the current sensor 52 that has detected the current value equal to or greater than the second predetermined value is installed. Upon completion of the transmission of the load suppression signal, the general control unit 53 returns to the step 100.

When the load suppression signal is received, the home control unit 7 controls an operation of a specific household load 62 in order to suppress power consumption thereof. To be specific, an air conditioner is temporarily stopped, or brightness of lighting devices is temporarily lowered. In other words, in the present embodiment, the step S104 corresponds to a step of limiting power consumption of a floor immediately above a floor where the current value equal to or greater than the second predetermined value is detected in the step S103.

In the above-described embodiment, the residential complex 100 corresponds to the building. Further, in the above-described embodiment, the general control unit 53 performs the processes carried out by the protection unit.

The power distribution system for a building and a protection method for the main line of the power distribution system in accordance with the embodiment of the present invention can provide the following effects.
(1) In the power distribution system for a building of the present embodiment, power is distributed to each floor of the residential complex via the main line 50 which is wired to pass through each floor of the residential complex 100. Further, a plurality of current sensors 52 for monitoring a current value of the main line 50 between floors of the residential complex 100 is provided between the floors of the residential complex 100. In the power distribution system for a building, when power is transmitted and received between the floors, a current value of the main line 50 becomes maximum at a portion other than the base portion of the main line 50. Even in that case, the above-described configuration can reliably detect the overcurrent of the main line 50 because the current value of the main line between the floors of the residential complex 100 is monitored.
(2) In the present embodiment, when any of the current sensors 52 detects a current value greater than a predetermined value, the general control unit 53 protects the main line 50 from an overcurrent by limiting power consumption of an upper floor of a floor where the current sensor 52 that has detected the overcurrent is installed. By limiting the power consumption of the upper floor of the floor where the overcurrent is detected, the current at the portion where the overcurrent is detected can be decreased. Accordingly, the power distribution system for a building of the present embodiment can properly protect the main line 50 from the overcurrent.
(3) In the protection method for the main line of the power distribution system for a building of the present embodiment, the main line 50 is protected from an overcurrent by the following two steps. First, at a first step, a current value of the main line 50 between the floors of the residential complex 100 is monitored (S103). At a second step, power consumption of an upper floor of a floor where the current value greater than the second predetermined value is monitored in the first step is limited (S104). In this protection method, even when the power is transmitted and received between the floors, the overcurrent of the main line 50 can be reliably detected by monitoring the current value of the main line 50 between the floors of the residential complex 100. Further, when the monitored current value is greater than the predetermined value, the power consumption of the floor immediately above the portion where the current value greater than the predetermined value is detected is limited. By limiting the power consumption as described above, the current at the portion where the overcurrent is detected is decreased. Therefore, in accordance with the protection method of the present embodiment, the main line 50 can be properly protected from the overcurrent.
(4) In the present embodiment, when any of the current sensors 52 detects a current value greater than or equal to about 90% of a shutdown current of the main line breaker 51, the protection control of the main line 50 is initiated. When the current value becomes smaller than about 80% of the shutdown current of the main line breaker 51, the protection control of the main line 50 is released. In other words, in the present embodiment, there is constant hysteresis between the current value (the second predetermined value) related to the initiation of the protection control and the current value (the first predetermined value) related to the release of the protection control. Hence, it is possible to properly avoid an occurrence of a control hunting of the protection control, i.e., repetition of initiation and release of the protection control within a short period of time.

In addition, the present embodiment may be modified as follows.

In the above-described embodiment, when any of the current sensors 52 detects a current value greater than the second predetermined value, the general control unit 53 protects the main line 50 from the overcurrent by limiting power consumption of a load 62 provided at an upper floor of the portion where the current sensor 52 that has detected the overcurrent is installed by controlling the operation of the load 62. The main line 50 can also be protected by shutting down a specific branch breaker 61 provided at a floor immediately above the floor where the current sensor 52 that has detected a current value greater than the second predetermined value is installed.

In the above-described embodiment, there is constant hysteresis between the first predetermined value and the second predetermined value. However, the first and the second predetermined value may be the same when the control hunting of the protection control can be neglected.

In the above-described embodiment, the main line 50 can be protected from an overcurrent by limiting power consumption of a floor immediately above a floor where the current sensor 52 that has detected a current value greater than the second predetermined value is installed. The protection control method of the main line 50 may be properly modified. For example, the main line 50 can be protected from an overcurrent by limiting power consumption of another floor other than the floor immediately above the floor where the current sensor 52 that has detected the overcurrent is installed.

In the above-described embodiment, each dwelling unit is equipped with the power supply system 1 shown in Fig. 2. However, another power supply system may also be employed. For example, the configuration of the power supply system may be changed as long as it has a function of receiving a load suppression signal or a load suppression release signal from the general control unit 53 and a function of limiting power consumption of the load 62 by controlling an operation of the load 62 or a function of shutting down the branch breakers 61 in accordance with the received load suppression signal.

The above-described embodiment has described the case in which the present invention is applied to the residential complex 100. However, the power distribution system or the protection method for a main line thereof can be applied to another building, e.g., a tenant building or the like, other than the residential complex. For example, the present invention can be applied to a power distribution system for distributing power to each floor of a building via a main line which is wired to pass through each floor of the building. Besides, the present invention can be applied to a configuration in which power is distributed to a plurality of sections (areas) of a building having one or more floors via a main line which is wired to pass through each section of the building and a power generator is installed at least one of the sections. In that case, the protection control of the main line 50 can be achieved by limiting power consumption of a section adjacent to a portion where a current sensor that has detected an overcurrent is installed. In addition, the present invention can be applied to a configuration capable of monitoring a current value of a main line by using current sensors provided between nodes of electric power distribution lines branched from a common main line which is wired to pass through, e.g., an area, not a same building.

While the invention has been described with respect to the embodiments, the present invention is not limited to the above embodiments and can be variously modified and changed without departing from the scope of the invention as defined in the following claims, and such changes and modifications are also included in the scope of the present invention.

## Claims

1. A power distribution system for distributing power via a main line, comprising:
a plurality of current sensors, provided between nodes of electric power distribution lines branched from the main line, for monitoring a current value of the main line.

2. The power distribution system of claim 1, wherein the main line distributes power to sections of a structure via the main line which is wired to pass through each section of the structure; and the current sensors are provided at respective section of the structure to monitor the current value of the main line in each section of the structure.

3. The power distribution system of claim 2, further comprising a protection unit for protecting, when any of the current sensors detects a current value greater than a predetermined value, the main line from an overcurrent by limiting power consumption of a section adjacent to the section where the current sensor that has detected the overcurrent is installed.

4. The power distribution system of claim 2, further comprising a protection unit for protecting, when any of the current sensors detects a current value greater than a predetermined value, the main line from an overcurrent by shutting down a specific breaker provided at a section adjacent to the section where the current sensor that has detected the overcurrent is installed.

5. The power distribution system of any one of claims 2 to 4, wherein surplus power is transmitted and received between the sections of the structure.

6. A protection method of a main line of a power distribution system for distributing power to each section of a structure via the main line which is wired to pass through each section of the structure, comprising:
monitoring a current value of the main line in each section of the structure; and
limiting power consumption of a section adjacent to a section where the current value greater than a predetermined value is monitored.

7. A protection method of a main line of a power distribution system for distributing power to each section of a structure via the main line which is wired to pass through each section of the structure, comprising:
monitoring a current value of the main line in each section of the structure; and
shutting down a specific breaker provided at a section adjacent to a section where the current value greater than a predetermined value is monitored.

8. The power distribution system of any one of claims 2 to 7, wherein the structure is a building and the section is a floor.
